# EUROPÄISCHE PATENTSCHRIFT

(11) **EP 2 683 596 B1**
(45) Veröffentlichungstag und Bekanntmachung des Hinweises auf die Patenterteilung: **24.06.2015**
(21) Anmeldenummer: 12707594.3
(22) Anmeldetag: 07.03.2012
(51) Int. Cl.: B62D 27/06, B62D 25/08, B62D 65/16

(54) **MULTIFUNKTIONSTRÄGER FÜR EIN KRAFTFAHRZEUG**
VEHICLE MULTIFUNCTIONAL SUPPORT CARRIER
SUPPORT MULTIFONCTION POUR UN VÉHICULE À MOTEUR

(30) Priorität: 07.03.2011 DE 102011013272; 11.03.2011 DE 102011013706
(43) Veröffentlichungstag der Anmeldung: 15.01.2014
(73) Patentinhaber: Faurecia Exteriors GmbH, 31655 Stadthagen (DE)
(72) Erfinder: CLAPIE, Yann, 31655 Stadthagen (DE); MEDER, Stefan, 31655 Stadthagen (DE); EICHLINGER, Daniel, 31655 Stadthagen (DE); WOHLMUTH, Roland, 31655 Stadthagen (DE); STRAUS, Michael, 31655 Stadthagen (DE); KILLERSREITER, Karl-Heinz, 31655 Stadthagen (DE); HOFFNER, Jaques, 31655 Stadthagen (DE); JOLY-POTTUZ, Pascal, 31655 Stadthagen (DE)
(74) Vertreter: Richardt Patentanwälte PartG mbB
(86) Internationale Anmeldenummer: PCT/EP2012/053926
(87) Internationale Veröffentlichungsnummer: WO 2012/120046

(56) Entgegenhaltungen:
- EP-A1- 1 070 639
- WO-A1-00/03909
- WO-A1-99/21748
- WO-A1-2008/101451
- DE-A1-102008 051 290

## Beschreibung

Die Erfindung betrifft einen Multifunktionsträger für ein Kraftfahrzeug, ein System umfassend einen Multifunktionsträger sowie ein Verfahren zur Montage von Kraftfahrzeug-Frontelementen an einer Karosserie eines Kraftfahrzeugs.

Kraftfahrzeug-Frontelemente wie Stoßfänger, Spoiler, Kühlergrill und Scheinwerfer sind im montierten Zustand bei einer Außenaufsicht auf ein Kraftfahrzeug sichtbar. Daher ist es wichtig, dass diese Kraftfahrzeug-Frontelemente in Bezug auf unmittelbar an dieselben angrenzende Kraftfahrzeug-Außenverkleidungsteile wie Kotflügel und Motorhaube ein optimales Fugenbild aufweisen. Der räumliche Abstand von diesen Kraftfahrzeug-Außenverkleidungsteilen und den Kraftfahrzeug-Frontelementen in Form dieses Fugenbildes erfordert das Vorhandensein von Einstellelementen, mittels welcher der Fugenabstand reguliert werden kann. Im Fall von Modulaufbauten mit einer Vielzahl von Kraftfahrzeug-Frontelementen werden z.B. die Frontelemente mit separaten Einstellelementen versehen, um bei der Montage einzeln zum Erhalt eines optimalen Fugenbildes justiert zu werden.

Die gegebenenfalls unterschiedlichen Fugenbilder bei der Montage der Kraftfahrzeug-Frontelemente an der Kraftfahrzeugkarosserie resultieren zum Beispiel aus Toleranzen bei der Fertigung der Karosserie, wodurch Veränderungen der Solllage der Kraftfahrzeug-Frontelemente resultieren.

WO 00/03909 A1 offenbart ein Verfahren zur Herstellung einer Mehrzahl von Endmodulbaugruppen, die an einem teilweise fertiggestellten Kraftfahrzeug anzubringen sind, wobei nach außen sichtbare Komponenten an einer inneren Stützstruktur in passender Ausrichtung bezüglich entsprechender Verkleidungsschürzen der äußeren Verkleidungsschürzen befestigt werden.

Der Erfindung liegt die Aufgabe zugrunde, einen Multifunktionsträger für ein Kraftfahrzeug, ein System umfassend einen Multifunktionsträger und eine Karosserie sowie ein verbessertes Verfahren zur Montage von Kraftfahrzeug-Frontelementen an einer Karosserie eines Kraftfahrzeugs zu schaffen.

Die Erfindung wird durch die Merkmale der unabhängigen Ansprüche definiert und damit wird die der Erfindung zugrunde liegende Aufgabe gelöst. Bevorzugte Ausführungsformen der Erfindung sind in den abhängigen Patentansprüchen angegeben.

Es wird ein Multifunktionsträger für ein Kraftfahrzeug angegeben, wobei der Multifunktionsträger mehrere Aufnahmen zur tragenden Aufnahme von Kraftfahrzeug-Frontelementen aufweist, wobei die Kraftfahrzeug-Frontelemente im montierten Zustand bei einer Außenansicht auf das Kraftfahrzeug sichtbar sind, wobei der Multifunktionsträger zusammen mit den aufgenommenen Kraftfahrzeug-Frontelementen gelagert an einer Karosserie des Kraftfahrzeugs fixierbar ist. Die Lagerung ist so ausgebildet, dass durch Lösen der Fixierung und Verschiebung des Multifunktionsträgers relativ zur Karosserie ein bei der Außenansicht auf das Kraftfahrzeug sichtbarer Fugenverlauf zwischen den Kraftfahrzeug-Frontelementen und an die Kraftfahrzeug-Frontelemente unmittelbar angrenzende Kraftfahrzeug-Außenverkleidungsteile in vordefinierter Weise einstellbar ist. Der Multifunktionsträger ist also schwimmend gelagert und in gewünschten Positionen relativ zur Karosserie fixierbar.

Ausführungsformen der Erfindung könnten den Vorteil haben, dass durch einen einfachen Justagevorgang in Form der Verschiebung des Multifunktionsträgers das Fugenbild optimiert und in vordefinierter Weise einstellbar ist. Vorzugsweise ist es so, dass ausschließlich durch eine präzise Verschiebung des Multifunktionsträgers relativ zur Karosserie der gesamte Fugenverlauf eingestellt wird. Anstatt also sämtliche Kraftfahrzeug-Frontelemente für sich gesehen einzeln zu verstellen und zu optimieren, erfolgt in einem ersten Arbeitsschritt die optimierte Festlegung des gesamten Multifunktionsträgers zusammen mit den aufgenommenen Kraftfahrzeug-Frontelementen an der Karosserie. Erst dann, wenn diese Verschiebung des Multifunktionsträgers zu keinem optimalen Fugenbild oder Fugenverlauf führt, kann zusätzlich eine Feinjustage der einzelnen Kraftfahrzeug-Frontelemente selbst relativ zum Multifunktionsträger vorgenommen werden. Insgesamt kann damit ein optisch ansprechendes Fugenbild bereits durch wenige Schritte der Nachjustierung der relativen Lage von Multifunktionsträger und Karosserie erzielt werden.

Dadurch, dass also ein Multifunktionsträger verwendet wird, der an die Karosserie befestigt wird und selbst Träger der Kraftfahrzeug-Frontelemente ist, kann insgesamt das Justieren der Kraftfahrzeug-Frontelemente relativ zu der den Kraftfahrzeug-Außenverkleidungsteilen wesentlich vereinfacht und optimiert werden. Ferner eröffnet dies neue Möglichkeiten der körperlich räumlichen Gestaltung der Kraft-fahrzeug-Frontelemente selbst. Im Optimalfall wird durch die Verwendung des Multifunktionsträgers eine separate Justage und Lageoptimierung der Kraftfahrzeug-Frontelemente in Bezug auf die Kraftfahrzeug-Außenverkleidungsteile hinfällig. In einem Arbeitsgang werden damit alle Kraftfahrzeug-Frontelemente zusammen durch Verschieben und Justieren des Multifunktionsträgers justiert.

Es sei angemerkt, dass unter der Fixierung des Multifunktionsträgers an der Karosserie sowohl eine direkt, als auch eine indirekte Fixierung an der Karosserie verstanden wird. Beispielsweise kann der Multifunktionsträger direkt mit der Karosserie verbunden werden, oder indirekt über an der Karosserie zu befestigende Bauelemente wie Crashboxen, Trägerteile, Montageträger und Verstärkungsteileeines Kraftfahrzeugs. Es ist auch allgemein möglich, den Multifunktionsträger über Energieabsorbierende Elemente an der Karosserie zu fixieren, um im Crashfall auf die Kraftfahrzeug-Frontelemente wirkende Kräfte über den Multifunktionsträger zu absorbieren, anstatt diese Kräfte direkt auf die Karosserie abzuleiten.

Nach einer Ausführungsform der Erfindung ist der Multifunktionsträger in einer ersten Richtung relativ zur Karosserie durch ein elastisches Element zwischen dem Multifunktionsträger und der Karosserie nach der Lösung der Fixierung automatisch verschiebbar. Beispielsweise kann der Multifunktionsträger über ein Federelement an der Karosserie abgestützt sein, sodass durch Lösen der Fixierung der Multifunktionsträger in eine bestimmte Vorzugsrichtung gezwängt wird. Dabei sei angemerkt, dass diese erste Richtung nicht nur ausschließlich eine einzelne "gerade" Richtung sein muss, sondern es ist auch möglich, dass diese erste Richtung eine Kurvenbewegung des Multifunktionsträgers relativ zur Karosserie umfassen kann.

Vorzugsweise wird der Multifunktionsträger durch das elastische Element gegen die Karosserie vorgespannt, sodass durch Lösen der Fixierung die automatische Bewegung in die erste Richtung erfolgt.

Durch die automatische Bewegung und automatische Verschiebung vereinfacht sich ein entsprechender Justagevorgang. Beispielsweise kann durch Lösen der Fixierung eine manuelle Verschiebung in eine zweite oder dritte Richtung freigegeben werden, wobei zusätzlich die automatischen Verschiebung in die erste Richtung ermöglicht wird. Aufgrund der schwimmenden Lagerung ist damit durch eine montierende Person eine sehr einfache Festlegung der Endposition des Multifunktionsträgers und damit der Kraftfahrzeug-Frontelemente relativ zur Karosserie und damit auch relativ zu den Kraftfahrzeug-Außenverkleidungsteilen möglich.

Nach einer Ausführungsform der Erfindung weist der Multifunktionsträger eine drehbare Justagehilfe auf, wobei die Justagehilfe zur Abstützung am Multifunktionsträger und der Karosserie ausgebildet ist, wobei durch Drehung der Justagehilfe der Multifunktionsträger in eine zweite Richtung relativ zur Karosserie nach der Lösung der Fixierung verschiebbar ist. Damit ist es möglich, über ein entsprechendes Montagewerkzeug, wie beispielsweise einen Schraubendreher oder Schraubenschlüssel, durch eine einzelne Drehbewegung in kontrollierter Weise den Multifunktionsträger in die zweite Richtung zu bewegen. Anstatt also in eher unkontrollierter Weise von außen durch Kraftausübung auf den Multifunktionsträger oder gar die Kraftfahrzeug-Frontelemente die Kraftfahrzeug-Frontelemente relativ zur Karosserie zu verschieben, genügt es, durch ein einzelnes Werkzeug unter Verwendung der Justagehilfe die Bewegung des Multifunktionsträgers in die zweite Richtung durchzuführen.

Beispielsweise weist die Justagehilfe ein gegen die Karosserie und/oder gegen den Multifunktionsträger abstützbaren Exzenter auf. Alternativ ist es möglich, dass die Justagehilfe eine Schraube aufweist, wobei die Schraube gegen eine axiale Verschiebung in Richtung der Schraubenachse gesichert und am Multifunktionsträger oder an der Karosserie axial unverschieblich festgelegt ist, wobei die Karosserie oder der Multifunktionsträger eine gegenstückige und gegen Bewegung gesicherte Mutter zur rotierenden Aufnahme der Schraube aufweist.

Nach einer weiteren Ausführungsform der Erfindung ist die Fixierung nach Abschluss der Verschiebung des Multifunktionsträgers in eine Endposition und damit Erhalt des gewünschten Fugenbilds wiederherstellbar. In anderen Worten kann in einem ersten Arbeitsschritt die Fixierung zur Verschiebung des Multifunktionsträgers zunächst gelöst werden. Nach Verschiebung des Multifunktionsträgers in die Endposition kann diese Fixierung daraufhin wiederhergestellt werden, d.h. diese Lösung der Fixierung rückgängig gemacht werden. Außerdem ist es möglich, in der Endposition durch zusätzliche Befestigungsmittel den Multifunktionsträger an der Karosserie zu fixieren.

Nach einer Ausführungsform der Erfindung ist der Multifunktionsträger biegesteif. Damit ist gesichert, dass die relative Lage der Kraftfahrzeug-Frontelemente zueinander fest definiert ist. Zwar können die Kraftfahrzeug-Frontelemente durch Lösen entsprechender Fixierungen vom Multifunktionsträger genommen werden bzw. am Multifunktionsträger in einer bestimmten Position festgelegt werden. Nachdem allerdings die Kraftfahrzeug-Frontelemente tragend durch den Multifunktionsträger aufgenommen wurden und an diesem fixiert wurden, ist eine relative Verschiebung dieser Kraftfahrzeug-Frontelemente zueinander aufgrund der Biegesteifigkeit des Multifunktionsträgers nicht mehr möglich. Eine Verschiebung des Multifunktionsträgers selbst relativ zur Karosserie bewirkt damit in eindeutiger und nachvollziehbarer Weise eine Relativverschiebung von Kraftfahrzeug-Fronelementen und Karosserie bzw. Kraftfahrzeug-Außenverkleidungsteilen.

Nach einer weiteren Ausführungsform der Erfindung umfassen die Kraftfahrzeug-Verkleidungsteile eine Motorhaube, wobei die erste Richtung die z-Richtung des Kraftfahrzeugs ist. Beispielsweise könnte die automatische Verschiebung in die erste Richtung durch das Schließen der Motorhaube selbst bewirkt werden. Durch Anbringen eines optionalen Distanzstücks zwischen der Motorhaube und einem entsprechenden an dem Multifunktionsträger montierten Kraftfahrzeug-Frontelement kann durch Schließen der Motorhaube der Multifunktionsträger und damit die Kraftfahrzeug-Frontelemente in eine Endposition gebracht werden. Erfolgt in dieser Endposition die endgültige Fixierung des Multifunktionsträgers an der Karosserie, ergibt sich dadurch das gewünschte Fugenbild bzw. der gewünschte Fugenverlauf zwischen den Kraftfahrzeug-Frontelementen und der Motorhaube.

Vorzugsweise ist in diesem Fall die automatische Verschiebung des Multifunktionsträgers in z-Richtung eine Verschiebung in Richtung der Motorhaube. Beim Schließen der Motorhaube drückt also der untere Rand der Motorhaube indirekt gegen den Multifunktionsträger, sodass entgegen der Kraft des elastischen Elements der Multifunktionsträger in seine Endposition gedrückt werden kann.

Nach einer weiteren Ausführungsform der Erfindung handelt es sich bei dem Kraftfahrzeug-Frontelement um Designteile.

Beispielsweise umfassen die Kraftfahrzeug-Frontelemente einen Scheinwerfer, einen Kühlergrill, einen Stoßfänger und/oder einen Spoiler.

Nach einer weiteren Ausführungsform der Erfindung handelt es sich bei der Verschiebung des Multifunktionsträgers relativ zur Karosserie um eine Verschiebung in drei Dimensionen. Zur Verschiebung in diese drei Dimensionen können die besagten Justagehilfen in einzelner oder mehrfacher Form zum Einsatz kommen. Beispielsweise kann eine Justagehilfe eine Bewegung in x-Richtung, eine andere Montagehilfe eine Bewegung in y-Richtung und das besagte elastische Element für eine Bewegung in z-Richtung zum Einsatz kommen. Es ist möglich, eine Verschiebung des Multifunktionsträgers in eine vorbestimmte Richtung durch manuelle Krafteinwirkung von außen auf den Multifunktionsträger oder die Kraftfahrzeug-Frontelemente zu bewirken.

Nach einer weiteren Ausführungsform der Erfindung weist der Multifunktionsträger eine Haupterstreckungsrichtung in Kraftfahrzeug-Querrichtung auf. Damit ist es möglich, sämtliche relevanten Kraftfahrzeug-Frontelemente, welche im montierten Zustand bei einer Außenaufsicht auf das Kraftfahrzeug sichtbar sind, am Multifunktionsträger zu lagern.

Es sei an dieser Stelle angemerkt, dass es sich bei dem "montierten Zustand" um jenen Zustand handelt, in welchem das Kraftfahrzeug an den Endkunden ausgeliefert wird. Es handelt sich als um diesen Zustand, in welchem der Fugenverlauf in der vordefinierten Weise eingestellt ist, d.h. in welchem sich der Multifunktionsträger in der fixierten Endposition befindet.

Nach einer weiteren Ausführungsform der Erfindung erstreckt sich der Multifunktionsträger über die gesamte Breite der Karosserie.

Nach einer weiteren Ausführungsform der Erfindung ist der Multifunktionsträger einstückig.

In einem weiteren Aspekt betrifft die Erfindung einen Multifunktionsträger wie obig beschrieben und eine Karosserie.

In einem weiteren Aspekt betrifft die Erfindung ein Verfahren zur Montage von Kraftfahrzeug-Frontelementen an einer Karosserie eines Kraftfahrzeugs gemäß Anspruch 15.

Beschrieben ist ferner ein Verfahren zur fugengenauen Befestigung von Designteilen wie Stoßfänger, Spoiler, Kühlergrill und Scheinwerfer an angrenzende Bauteile wie Querträger, Crashboxen, Montageträger, Schließ- bzw. Verstärkungsteile und Trägerteile eines Kraftfahrzeugs, wobei bei der Befestigung der Fugenverlauf, d. h. der Abstand der Designteile zu den angrenzenden Bauteilen justiert und anschließend fixiert wird, wobei ein Multifunktionsträger verwendet wird, der an die angrenzenden Bauteile befestigt wird und der Träger der Designteile ist und der Fugenverlauf ausschließlich durch Justieren des Multifunktionsträgers beim Befestigen an den angrenzenden Bauteilen eingestellt wird und nach der Justierung der Multifunktionsträger fixiert wird.

Z.B. wird der Multifunktionsträger als Abdeckung des Kühlers bzw. Kühlgebläses ausgebildet.

Z.B. wird der Multifunktionsträger durch ein elastisches Element in oder gegen die Justierrichtung vorgespannt befestigt und anschließend justiert und dann fixiert wird bzw. gegen Vorspannung fixiert.

Nach einer Ausführungsform der Erfindung wird ein Rand des Multifunktionsträgers U-förmig mit abgerundeten Ecken ausgebildet.

Nach einer Ausführungsform der Erfindung wird der Multifunktionsträger schwimmend an den angrenzenden Bauteilen befestigt, wobei sich durch Betätigung von den angrenzenden Bauteilen der Multifunktionsträger selbsttätig ausrichtet oder manuell ausgerichtet wird und anschließend die dauerhafte Fixierung durch zum Beispiel Schrauben erfolgt.

Nach einer Ausführungsform, die nicht Teil der beanspruchten Erfindung ist, wird der Multifunktionsträger schwimmend an Crashboxen befestigt. Z.B. richtet er sich durch Schließen der bereits vorausgerichteten Motorhaube selbsttätig an der Motorhaube aus. Möglich ist auch, dass er mittels mechanischer Einstellelemente ausgerichtet wird. Anschließend erfolgt die dauerhafte Fixierung durch zum Beispiel Schrauben oder Verklipsen. Nach einer Ausführungsform der Erfindung wird der Multifunktionsträger durch ein elastisches Element vorgespannt und fixiert, wobei er nach Schließen der Motorhaube durch Entspannen und anschließendes Fixieren ausgerichtet wird. Bevorzugt wird der Multifunktionsträger sich parallel zum Querträger und entlang der Breite des Fahrzeugs erstreckend ausgebildet. Er kann dadurch nahezu alle Designteile an der Vorderseite des Kraftfahrzeugs aufnehmen.

In bevorzugter Ausführungsform wird der Multifunktionsträger einstückig ausgebildet. Hierdurch ist er leicht herzustellen und bringt zugleich die nötige Tragkraft für die Designteile mit. Zusätzlich kann der Multifunktionsträger auch als Abdeckung des Kühlers bzw. Kühlgebläses oder Abdeckung der Designteile ausgebildet werden.

Der Multifunktionsträger dient zur Ausrichtung der Designteile, zur Befestigung dieser und bietet zugleich eine Tragstruktur für weitere Komponenten, wie z.B. Sensoren und Kameras.

Durch Justieren des Multifunktionsträgers werden gleichzeitig alle Designteile justiert, wodurch die Toleranzkette wesentlich reduziert ist. Dieses System ist entkoppelt von der Struktur des Kraftfahrzeugs.

In bevorzugter Ausführungsform wird der Multifunktionsträger zur Justierung auf einer flexiblen Lagerung bevorzugt in drei Dimensionen verschiebbar bzw. schwimmend befestigt und nach der Justierung fixiert. Dieses Befestigen auf der flexiblen Lagerung ist eine Art Vormontage. Nach der Befestigung erfolgen das Justieren und dann das Fixieren.

In einer Ausgestaltung des Verfahrens kann der Multifunktionsträger durch ein elastisches Element in oder gegen die Justierrichtung vorgespannt befestigt und anschließend justiert und dann fixiert werden bzw. gegen Vorspannung fixiert werden. Hierdurch lässt sich das Justieren leichter durchführen. Außerdem kann das Justieren auch automatisch erfolgen, was weiter unten beschrieben wird.

Die eben beschriebene Vorspannung kann auch in den Multifunkfiionsträger integriert werden und zwar so, dass der Multifunktionsträger an seinem Rand in seiner Geometrie als Feder ausgebildet wird. Der als Feder wirkende Rand liegt dann an einem angrenzenden Bauteil an. Bevorzugt wird der Rand U, L oder S -förmig mit abgerundeten Ecken ausgebildet. Durch diese Geometrie ist der Rand von selbst elastisch und wirkt wie eine Feder.

Durch die Erfindung kann der Fugenverlauf für alle an ihm befestigten Designteile in der Gesamtheit durchgeführt werden. Dies passiert mechanisch z. B. mit einem Einstellwerkzeug.

Alternativ kann die Befestigung durch eine flexible Lagerung des tragenden Multifunktionsträgers erfolgen, derart, dass der Multifunktionsträger und die Designteile sich automatisch an die umgebenden Teile anpassen. Bei der Montage werden die am Multifunktionsträger angeordneten Designteile an die umgebenden Teile, wie Motorhaube angelegt. Die Designteile bzw. der Multifunktionsträger richten sich dabei durch die flexible Lagerung selbst aus oder können manuell eingestellt werden. Anschließend werden der Multifunktionsträger und damit die Designteile fixiert. Der Fugenverlauf ist dann korrekt eingestellt. Dadurch entfällt der Zusatzaufwand einer Nacheinstellung.

Der Multifunktionsträger dient zur Ausrichtung und zur Befestigung der Designteile. Er ist so konstruiert, dass er bevorzugt in drei Dimensionen verschiebbar befestigt werden kann.

Im Weiteren werden bevorzugte Ausführungsformen der Erfindung anhand der Zeichnungen näher erläutert. Es zeigen:
- Figur 1: einen Multifunktionsträger mit mehreren Kraftfahrzeug-Frontelementen,
- Figur 2: einen Multifunktionsträger mit Kraftfahrzeug-Frontelementen im an der Karosserie montierten Zustand,
- Figur 3: eine schematische Ansicht einer Verwendung von Justagehilfen,
- Figur 4: eine schematische Ansicht der Verwendung von Justagehilfen,
- Figur 5: eine schematische Ansicht der Verwendung von Justagehilfen,
- Figur 6: eine schematische Ansicht der Verwendung von Justagehilfen,
- Figur 7: eine schematische Ansicht der Verwendung von Justagehilfen,
- Figur 8: eine schematische Ansicht der Verwendung von Justagehilfen,
- Figur 9: eine schematische Ansicht eines Multifunktionsträgers bei geschlossener Motorhaube,
- Figur 10: eine schematische Ansicht eines Multifunktionsträgers und einer Motorhaube,
- Figur 11: eine schematische Ansicht eines Multifunktionsträgers und einer Motorhaube.

Im Folgenden werden einander ähnliche Elemente mit den gleichen Bezugszeichen gekennzeichnet.

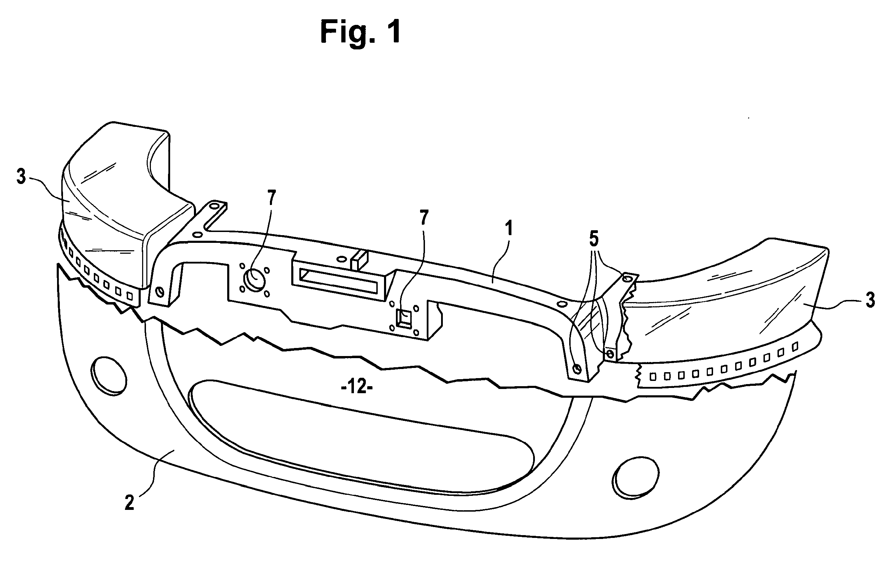

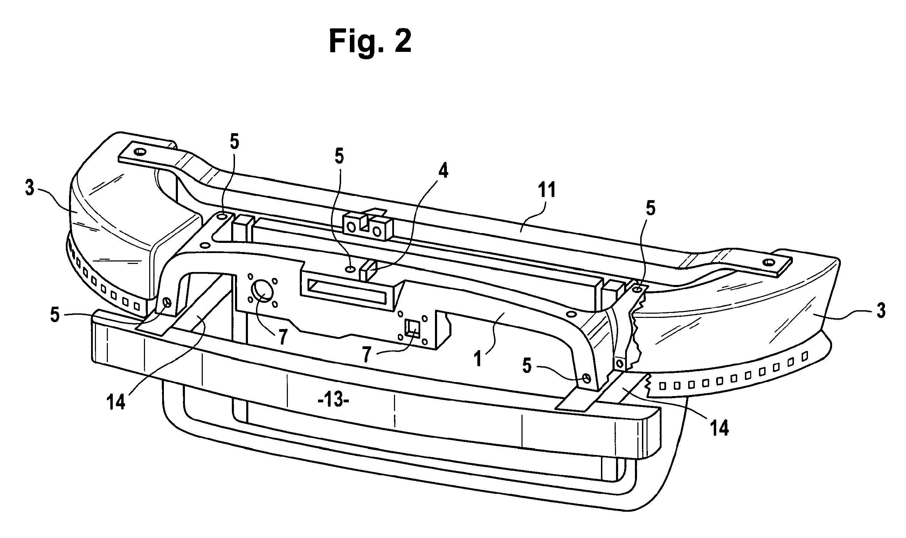

Die Figur 1 zeigt einen Multifunktionsträger 1 für ein Kraftfahrzeug, wobei der Multifunktionsträger mehrere Kraftfahrzeug-Frontelemente trägt. Beispielsweise trägt der Multifunktionsträger einen Stoßfänger 2, einen Kühlergrill 12 und einen Scheinwerfer 3. Der Multifunktionsträger 1 ist zusammen mit diesen Kraftfahrzeug-Frontelementen 2, 3 und 12 an einer Karosserie eines Kraftfahrzeugs fixierbar. Dies ist in Figur 2 gezeigt, wobei hier der Übersichtlichkeit halber sowohl Kühlergrill 12 als auch Stoßfänger 2 (welcher auch mehrteilig ausgeführt sein kann) weggelassen wurden.

Figur 2 zeigt einen Querträger 13 eines Kraftfahrzeugs, wobei der Querträger 13 Teil der Karosserie ist. Der Querträger 13 ist über Crashboxen 14 an der Karosserie des Kraftfahrzeugs befestigt, wobei der Multifunktionsträger 1 über Befestigungspunkte 5 entweder direkt und unmittelbar an der Karosserie befestigbar ist oder beispielsweise über die Crashboxen 14 an der Karosserie befestigbar ist.

Der Multifunktionsträger ist erfindungsgemäß am Querträger 13 befestigt, was in den Zeichnungen nicht dargestellt ist. Er kann aber auch ergänzend zur oder anders als in der Erfindung am Trägerteil 11 befestigt werden. Der Multifunktionsträger 1 erstreckt sich nahezu über die gesamte Breite des Fahrzeugs und weist eine Haupterstreckungsrichtung in Kraftfahrzeug-Querrichtung auf. Im Falle der Figur 2 erstreckt sich der Multifunktionsträger 1 von der einen zur anderen Crashbox 14.

Mit dem Bezugszeichen 7 sind Befestigungspunkte für eine Kamera und einen Sensor gekennzeichnet, wobei für diese Teile der Multifunktionsträger ebenfalls als Befestigungselement dient und diesen Teilen eine besonders stabile Befestigung verschafft.

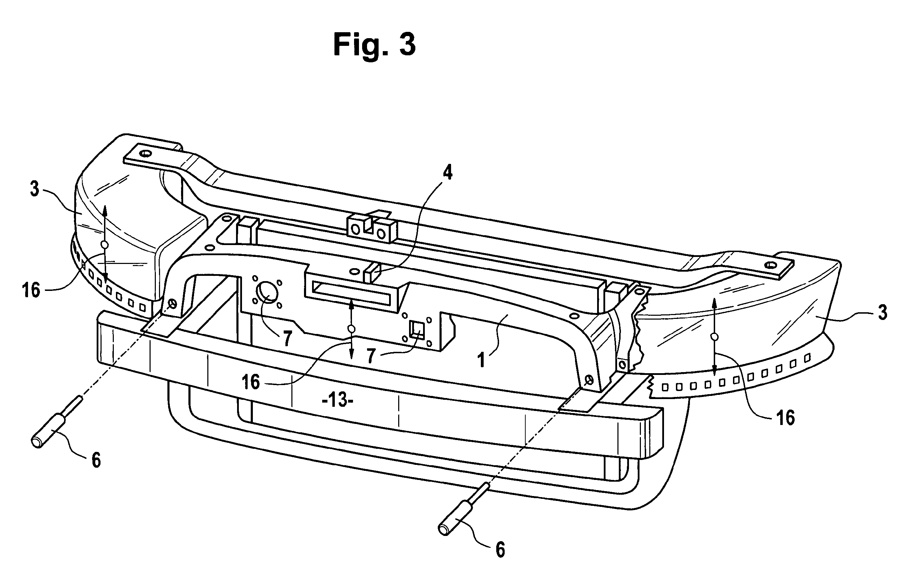

Um nun bei der Außenansicht auf das Kraftfahrzeug einen optisch anmutenden Fugenverlauf zwischen den besagten Kraftfahrzeug-Frontelementen, wie beispielsweise den Scheinwerfern 3, und einem in Figur 2 nicht näher ersichtliches Kraftfahrzeug-Außenverkleidungsteil zu gewährleisten, ist der Multifunktionsträger 1 schwimmend an der Karosserie, im vorliegenden Fall an den Crashboxen 14 gelagert. Dies sei im Folgenden bezüglich der Figuren 3 - 8 erläutert:
In Figur 3 ist der Multifunktionsträger 1 ersichtlich, wobei durch Verwendung eines Montagewerkzeugs 6 und Drehen des Werkzeugs 6 eine Verschiebung des Multifunktionsträgers 1 in z-Richtung, das heißt Richtung 16, bewirkbar ist. Beispielsweise greift das Werkzeug 6 in eine Justagehilfe des Multifunktionsträgers ein, welche drehbar ist, wobei durch die Drehung der Justagehilfe über das Werkzeug 6 der Multifunktionsträger in Richtung 16 relativ zur Karosserie verschiebbar ist. Beispielsweise ist am Multifunktionsträger ein Exzenter abgestützt, wobei durch Drehen des Exzenters der Abstand zwischen Multifunktionsträger 1 und Karosserie bzw. Crashboxen 14 variiert wird.

Es sei angemerkt, dass unter der z-Richtung des Kraftfahrzeugs die Kraftfahrzeug-Vertikafrichtung, unter der y-Richtung die Kraftfahrzeug-Querrichtung und unter die x-Richtung die Kraftfahrzeug-Längsrichtung verstanden wird.

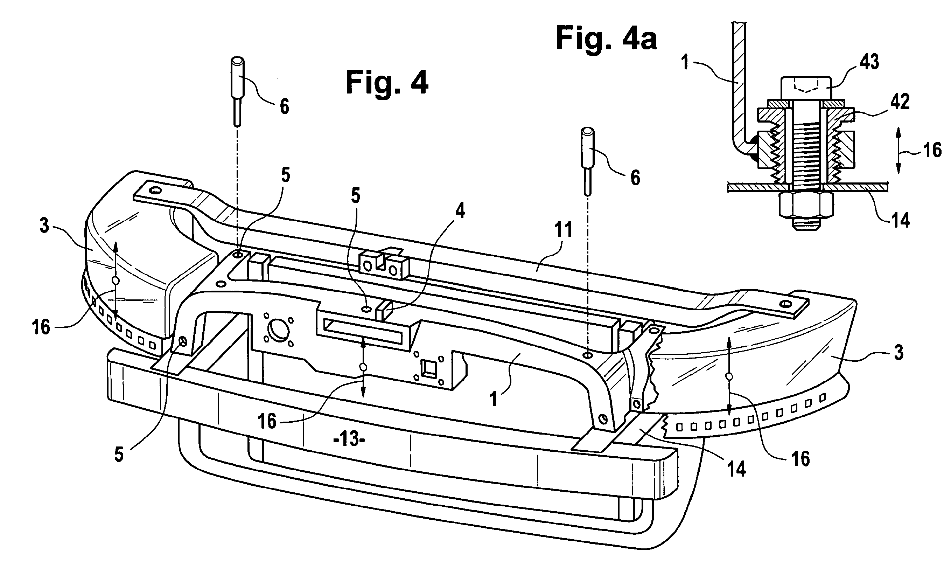

Die Figur 4 zeigt eine alternative Ausführungsform der Figur 3, wobei in diesem Fall die Montagewerkzeuge in z-Richtung geführt werden, um die Bewegung in Richtung 16 zu ermöglichen. Hierbei kann beispielsweise eine Schraube verwendet werden, wobei die Schraube gegen eine axiale Verschiebung in Richtung der Schraubenachse gesichert ist und am Multifunktionsträger oder an der Karosserie axial unverschieblich festgelegt ist, wobei die Karosserie oder der Multifunktionsträger eine gegenstückige und gegen Bewegung gesicherte Mutter zur rotierenden Aufnahme der Schraube aufweist. In der Figur 4a ist eine Variante mit einer Hohlschraube 2 gezeigt: Durch drehen der Hohlschraube 42 kann der Multifunktionsträger 1 in seiner Position in z-Richtung verschoben werden. Anschließend kann eine endgültige Fixierung durch eine Fixierungsschraube 43 in der Axialrichtung erfolgen.

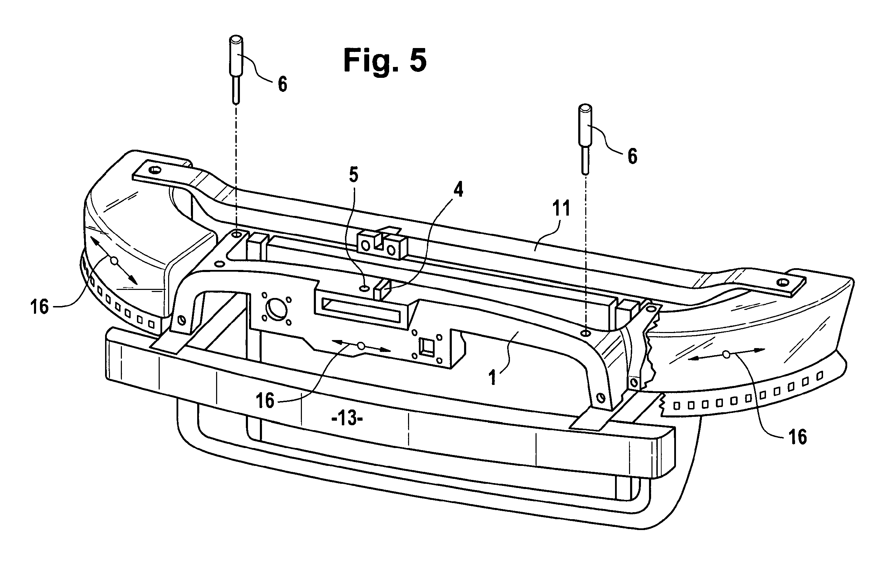

Die Figur 5 entspricht der Figur 4, wobei jedoch hier durch Drehung der Justagehilfe mittels des Werkzeugs 6 eine Bewegung in y-Richtung (Bewegungsrichtung 16 in Figur 5) initiiert wird. Dadurch ist es möglich, in gezielter Weise in y-Richtung den Multifunktionsträger und damit die Kraftfahrzeug-Frontelemente zu verschieben.

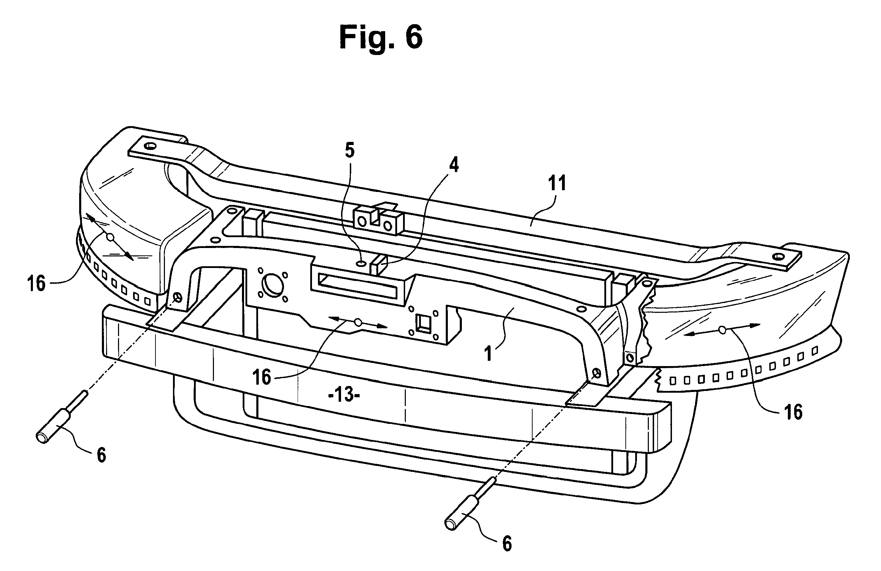

In der Figur 6 wird dies durch eine Führung des Werkzeugs 6 in x-Richtung bewerkstelligt.

Es sei angemerkt, dass die in Figuren 2 - 6 der mit Bezugszeichen 4 gekennzeichnete Ausrichtungspunkt beispielsweise dazu verwendet werden kann, um eine in y-Richtung vorzunehmende Positionierung des Multifunktionsträgers bzw. der Kraftfahrzeug-Frontelemente relativ zur Karosserie und damit relativ zu den angrenzenden Kraftfahrzeug-Außenverkleidungsteilen vorzunehmen. Der Ausrichtungspunkt kann durch Verschiebung des Multifunktionsträgers an einem gegenstückigen Ausrichtungspunkt, beispielsweise an einer darüber befindlichen Motorhaube ausgerichtet werden. Dadurch ist in einfacher Weise eine Positionierungshilfe gegeben. Die Verwendung von Ausrichtungspunkten an dem Multifunktionsträger und den Kraftfahrzeugaußenverkleidungsteilen ist für Positionierungen in allen drei Dimensionen möglich.

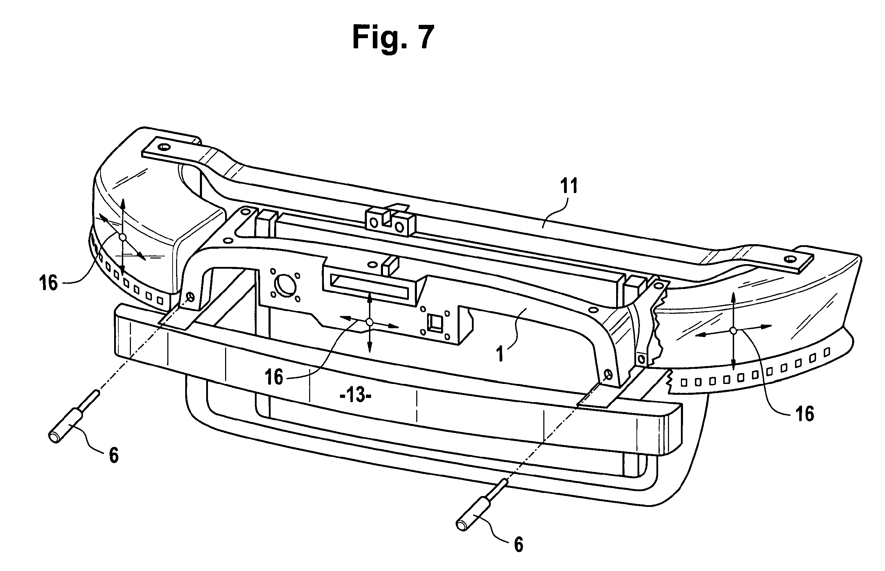

Die Figur 7 zeigt eine weitere Ausführungsform der Figur 6, wobei hier durch das Drehen des Werkzeugs 6 die Bewegung in Z-Richtung erzeugt wird. Zusätzlich ist es möglich, durch manuelles Drücken oder Schieben in Y-Richtung eine Bewegung des Multifunktionsträgers in Y-Richtung zu bewirken.

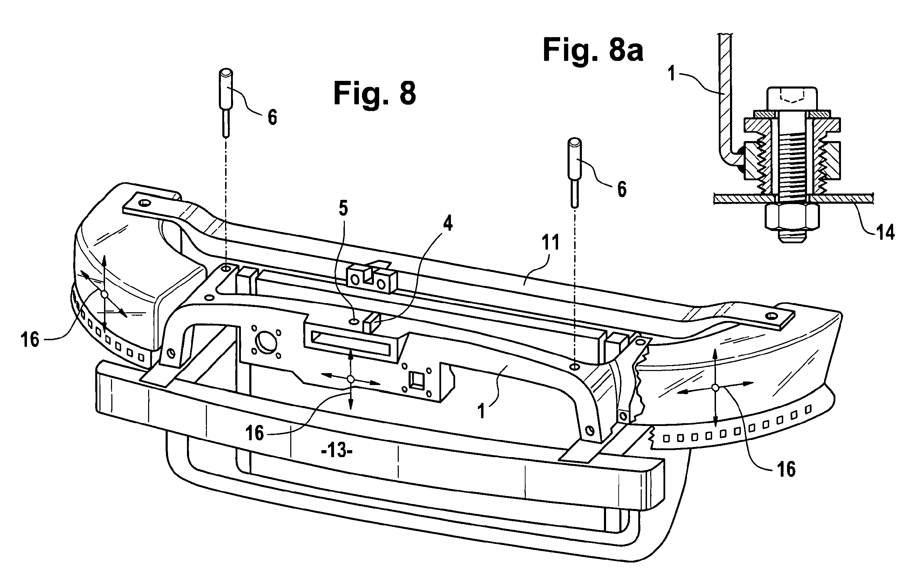

In der Ausführungsform der Figur 8 geschieht dies durch eine Einführung des Werkzeugs 6 in z-Richtung, wobei durch die Drehung des Werkzeugs 6 die Bewegung in Z-Richtung erzwungen wird. Durch wiederum manuelles Drücken entweder auf das Werkzeug 6 und/oder den Multifunktionsträger bzw. dessen Kraftfahrzeug-Frontelemente ist die Bewegung in Y-Richtung erzwingbar.

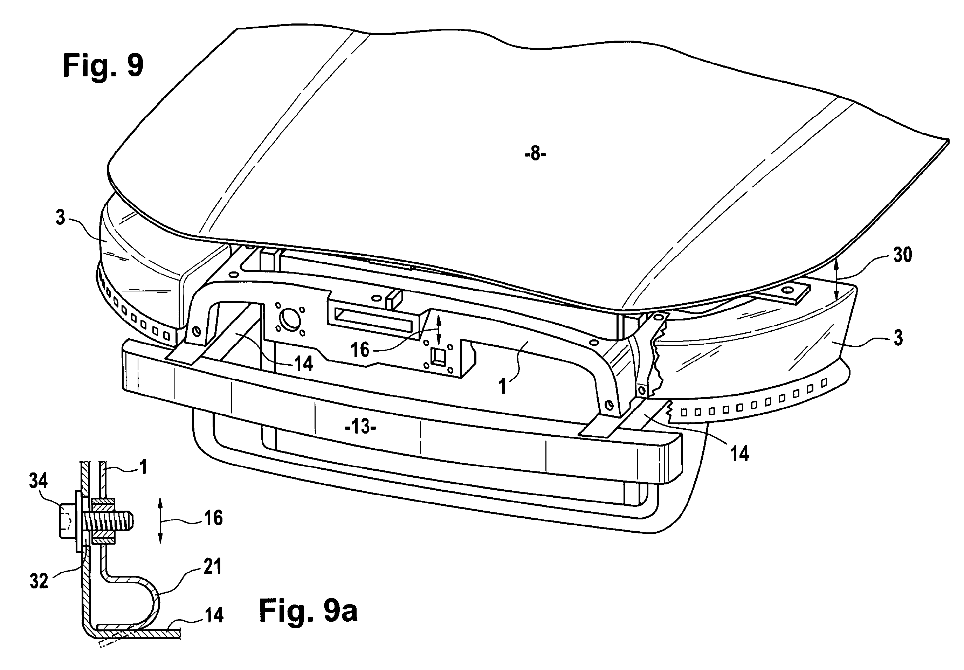

Die Figur 9 zeigt eine weitere Detailansicht der Figur 2, wobei hier noch zusätzlich die Motorhaube 8 im geschlossenen Zustand skizziert ist. Sichtbar ist hier der Fugenabstand 30 zwischen Motorhaube 8 und den Scheinwerfern 3. Ziel ist es nun, den Fugenabstand 30 in vordefinierter Weise einzustellen. Dies erfolgt über den Multifunktionsträger 1, welcher relativ zur Karosserie des Kraftfahrzeugs und im vorliegenden Fall relativ zu den Crashboxen 14 verschoben werden kann.

Ein elastisches Element zwischen dem Multifunktionsträger 1 und den Crashboxen unterstützt dabei den Verschiebevorgang. Dieses elastische Element ist in Figur 9a mit dem Bezugszeichen 21 gekennzeichnet. Der Multifunktionsträger 1 ist über eine Schraube 34 in einem Langloch 32 der Crashbox 14 führbar. Nach Lösen der Schraube 34 ist es möglich, durch eine Kraft in Richtung 16, im vorliegenden Fall in Kraftfahrzeug-z-Richtung, auf den Multifunktionsträger den Multifunktionsträger in z-Richtung zu bewegen.

Hierzu kann entweder eine montierende Person im geschlossenen Zustand der Motorhaube von Hand den Multifunktionsträger verschieben. Alternativ kann beim Schließen der Motorhaube ein Distanzstück zwischen der Unterkante der Motorhaube und den Scheinwerfern verwendet werden. Das Distanzstück definiert so den gewünschten Fugenabstand 30. Wird in diesem Fall der Deckel der Motorhaube 8 geschlossen, so wird dadurch entgegen der Federkraft der Feder 21 eine Kraft in Richtung 16 von der Motorhaube auf den Multifunktionsträger indirekt ausgeübt. Im geschlossenen Zustand der Motorhaube kann dann die Schraube 34 festgezogen werden, wodurch der Multifunktionsträger 1 an der Kraftfahrzeug-Karosserie festgelegt wird.

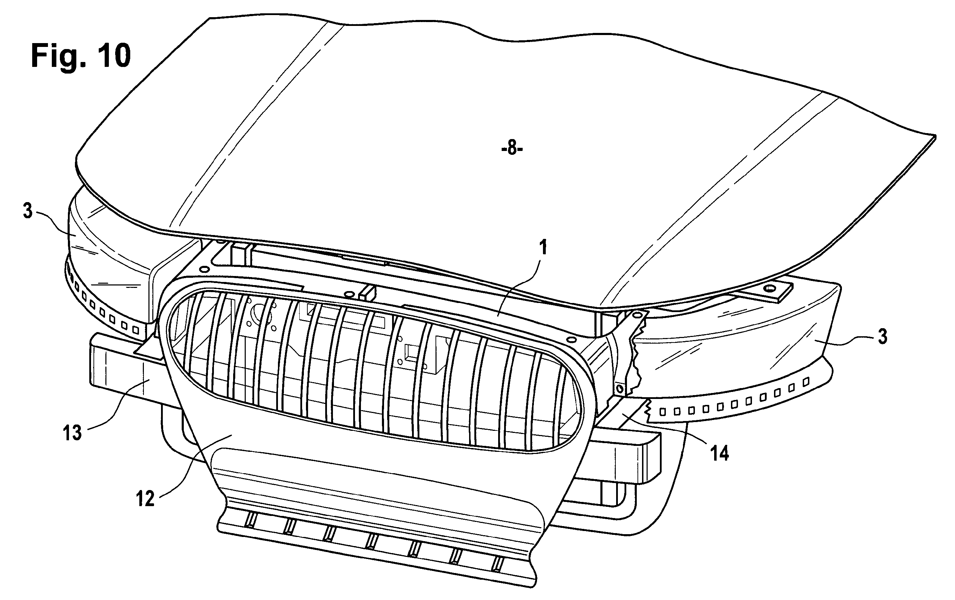

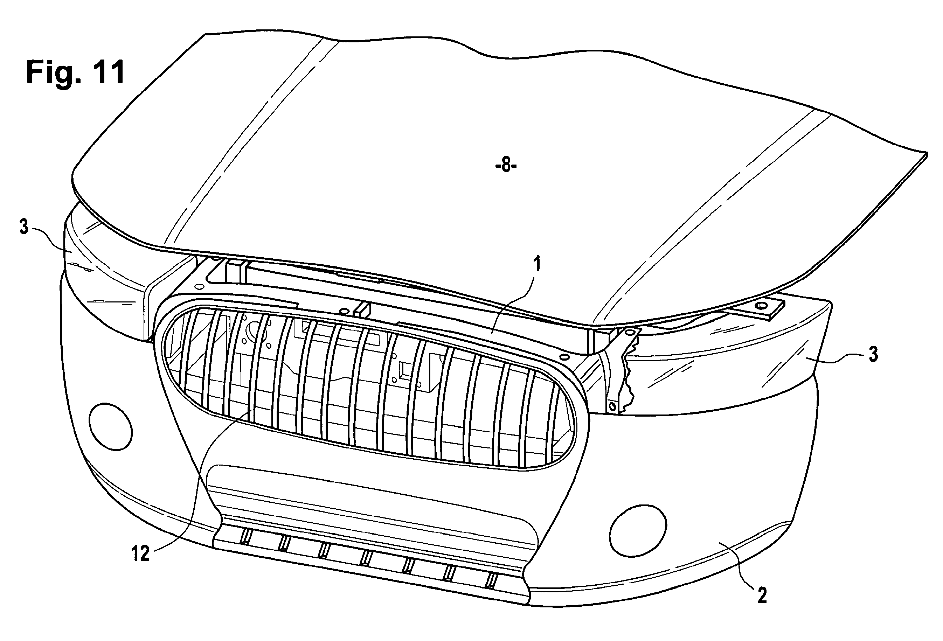

Die Figuren 10 und 11 zeigen weitere Ansichten der Figur 9, wobei zusätzlich ein Kühlergrill 12 (Figur 10) und ein Stoßfänger 2 (Figur 11) gezeigt sind. Allgemein wird vorzugsweise eine automatische Ausrichtung des Multifunktionsträgers 1 vorgenommen, wobei nachdem der Multifunktionsträger 1 schwimmend an den Crashboxen 14 befestigt wurde, die bereits vorausgerichtete Motorhaube 8 geschlossen wird. Dabei wird der Multifunktionsträger 1, der durch das elastische Element 21 vorgespannt wird, selbstständig an der Motorhaube 8 ausgerichtet. Anschließend erfolgt die dauerhafte Fixierung durch die Schrauben 9.

### Bezugszeichenliste

- 1: Multifiunktionsträger
- 2: Stoßfänger
- 3: Scheinwerfer
- 4: Ausrichtungspunkt
- 5: Befestigungspunkt
- 6: Werkzeug
- 7: Aufnahme
- 8: Motorhaube
- 11: Trägerteil
- 12: Kühlergrill
- 13: Querträger
- 14: Crashbox
- 16: Richtung
- 21: Federelement
- 30: Fuge
- 32: Langloch
- 34: Schraube
- 42: Hohlschraube
- 43: Fixierungsschraube

## Patentansprüche

1. System umfassend einen Multifunktionsträger (1) für ein Kraftfahrzeug und einen Querträger (13) der Karosserie des Kraftfahrzeugs, wobei der Multifunktionsträger (1) mehrere Aufnahmen zur tragenden Aufnahme von Kraftfahrzeugfrontelementen (2; 3; 12) aufweist, wobei die Kraftfahrzeugfrontelemente (2; 3; 12) im montierten Zustand bei einer Außenaufsicht auf das Kraftfahrzeug sichtbar sind, wobei der Multifunktionsträger (1) zusammen mit den aufgenommenen Kraftfahrzeugfrontelementen (2; 3; 12) schwimmend gelagert an einer Karosserie (11; 13; 14) des Kraftfahrzeugs fixierbar ist, wobei die schwimmende Lagerung so ausgebildet ist, dass durch Lösen der Fixierung und Verschiebung des Multifunktionsträgers (1) relativ zur Karosserie (11; 13; 14) ein bei der Außenaufsicht auf das Kraftfahrzeug sichtbarer Fugenverlauf (30) zwischen den Kraftfahrzeugfrontelementen (2; 3; 12) und an die Kraftfahrzeugfrontelemente (2; 3; 12) unmittelbar angrenzende Kraftfahrzeugaußenverkleidungsteile (8) in vordefinierter Weise einstellbar ist, wobei der Querträger (13) über Crashboxen (14) des Kraftfahrzeugs an der Karosserie befestigt ist, **dadurch gekennzeichnet dass** der Multifunktionsträger (1) über den Querträger (13) an der Karosserie fixiert ist.

2. System nach Anspruch 1, wobei der Multifunktionsträger (1) in einer ersten Richtung relativ zur Karosserie (11; 13; 14) durch ein elastisches Element (21) zwischen dem Multifunktionsträger (1) und der Karosserie (11; 13; 14) nach der Lösung der Fixierung automatisch verschiebbar ist.

3. System nach Anspruch 1 oder 2, wobei der Multifunktionsträger (1) eine drehbare Justagehilfe aufweist, wobei die Justagehilfe zur Abstützung am Multifunktionsträger (1) und der Karosserie (11; 13; 14) ausgebildet ist, wobei durch Drehung der Justagehilfe der Multifunktionsträger (1) in einer zweiten Richtung relativ zur Karosserie (11; 13; 14) nach der Lösung der Fixierung verschiebbar ist.

4. System nach Anspruch 3, wobei die Justagehilfe
- ein gegen die Karosserie (11; 13; 14) und/oder gegen den Multifunktionsträger (1) abstützbaren Exzenter aufweist oder
- eine Schraube (42) aufweist, wobei die Schraube gegen eine axiale Verschiebung in Richtung der Schraubenachse gesichert und am Multifunktionsträger (1) oder an der Karosserie (11; 13; 14) axial unverschieblich festgelegt ist, wobei die Karosserie (11; 13; 14) oder der Multifunktionsträger (1) eine gegenstückige und gegen Bewegung gesicherte Mutter zur rotierenden Aufnahme der Schraube aufweist.

5. System nach einem der vorigen Ansprüche, wobei die Fixierung nach Verschiebung des Multifunktionsträgers (1) relativ zur Karosserie (11; 13; 14) wieder herstellbar ist.

6. System nach einem der vorigen Ansprüche, wobei der Multifunktionsträger (1) biegesteif ist.

7. System nach einem der vorigen Ansprüche2 -6, wobei die Kraftfahrzeugaußenverkleidungsteile (8) eine Motorhaube umfassen , wobei die erste Richtung die z-Richtung des Kraftfahrzeugs ist.

8. System nach Anspruch 7, wobei die automatische Verschiebung in die erste Richtung durch Schließen der Motorhaube bewirkbar ist.

9. System nach einem der vorigen Ansprüche, wobei es sich bei den Kraftfahrzeugfrontelementen (2; 3; 12) um Designteile handelt.

10. System nach einem der vorigen Ansprüche, wobei die Kraftfahrzeugfrontelemente (2; 3; 12) einen Scheinwerfer, einen Kühlergrill, einen Stoßfänger und/oder einen Spoiler umfassen.

11. System nach einem der vorigen Ansprüche, wobei es sich bei der Verschiebung des Multifunktionsträgers (1) relativ zur Karosserie (11; 13; 14) um eine Verschiebung in drei Dimensionen handelt.

12. System nach einem der vorigen Ansprüche, wobei der Multifunktionsträger (1) eine Haupterstreckungsrichtung in Kraftfahrzeugquerrichtung aufweist.

13. System nach einem der vorigen Ansprüche, wobei sich der Multifunktionsträger (1) über die gesamte Breite der Karosserie (11; 13; 14) erstreckt.

14. System nach einem der vorigen Ansprüche, wobei der Multifunktionsträger (1) einstückig ist.

15. Verfahren zur Montage von Kraftfahrzeugfrontelementen (2; 3; 12) an einer Karosserie (11; 13; 14) eines Kraftfahrzeugs, wobei die Kraftfahrzeugfrontelemente (2; 3; 12) im montierten Zustand bei einer Außenaufsicht auf das Kraftfahrzeug sichtbar sind, wobei das Verfahren umfasst:
- Montage der Kraftfahrzeugfrontelemente (2; 3; 12) an einem Multifunktionsträger (1), wobei der Multifunktionsträger (1) mehrere Aufnahmen zur tragenden Aufnahme der montierten Kraftfahrzeugfrontelemente (2; 3; 12) aufweist,
- Fixierung des die Kraftfahrzeugfrontelemente (2; 3; 12) tragenden Multifunktionsträgers (1) an der Karosserie (11; 13; 14) unter Verwendung einer schwimmenden Lagerung des Multifunktionsträgers (1) an der Karosserie (11; 13; 14),
- Lösen der Fixierung und Verschiebung des Multifunktionsträgers (1) relativ zur Karosserie (11; 13; 14), wobei die Verschiebung so erfolgt, dass ein bei der Außenaufsicht auf das Kraftfahrzeug sichtbarer Fugenverlauf (30) zwischen den Kraftfahrzeugfrontelementen (2; 3; 12) und an die Kraftfahrzeugfrontelemente (2; 3; 12) unmittelbar angrenzende Kraftfahrzeugaußenverkleidungsteile (8) in vordefinierter Weise eingestellt wird,
- Endgültige Fixierung des Multifunktionsträgers (1) an der Karosserie (11; 13; 14),
**dadurch gekennzeichnet dass**
der Querträger (13) über Crashboxen (14) des Kraftfahrzeugs an der Karosserie befestigt wird und wobei der Multifunktionsträger (1) über den Querträger (13) an der Karosserie fixiert wird.

## Claims

1. A system comprising a multi-functional support (1) for a motor vehicle and a crossmember (13) of the body of the motor vehicle, wherein the multi-function support (1) has a plurality of mounts for accommodating motor vehicle front elements (2; 3; 12) in a supporting manner, wherein the motor vehicle front elements (2; 3; 12) in the installed state are visible in an external plan view of the motor vehicle, wherein the multi-functional support (1) together with the accommodated motor vehicle front elements (2; 3; 12) can be fixed in a floatingly mounted manner on a body (11; 13; 14) of the motor vehicle, wherein the floating mounting is configured such that, by releasing the fixing and by displacing the multi-functional support (1) relative to the body (11; 13; 14), a joint line (30), which is visible in an external plan view of the motor vehicle, between the motor vehicle front elements (2; 3; 12) and motor vehicle external trim parts (8) directly adjacent to the motor vehicle front elements (2; 3; 12) can be adjusted in a predefined manner, wherein the crossmember (13) is secured to the body via crash boxes (14) of the motor vehicle, **characterised in that** the multi-functional support (1) is fixed to the body via the crossmember (13).

2. The system according to Claim 1, wherein the multi-functional support (1) is automatically displaceable in a first direction relative to the body (11; 13; 14) by a resilient element (21) between the multi-functional support (1) and the body (11; 13; 14) once the fixing has been released.

3. The system according to Claim 1 or 2, wherein the multi-functional support (1) has a rotatable adjustment aid, wherein the adjustment aid is configured to be supported on the multi-functional support (1) and the body (11; 13; 14), wherein, by rotating the adjustment aid, the multi-functional support (1) is displaceable in a second direction relative to the body (11; 13; 14) once the fixing has been released.

4. The system according to Claim 3, wherein the adjustment aid
- has an eccentric that can be supported against the body (11; 13; 14) and/or against the multi-functional support (1), or
- has a screw (42), wherein the screw is secured against an axial displacement in the direction of the screw axis and is fixed in an axially non-displaceable manner on the multi-functional support (1) or on the body (11; 13; 14), wherein the body (11; 13; 14) or the multi-functional support (1) has a mating nut, which is secured against movement, for accommodating the screw rotatably.

5. The system according to one of the preceding claims, wherein the fixing can be re-established following displacement of the multi-functional support (1) relative to the body (11; 13; 14).

6. The system according to one of the preceding claims, wherein the multi-functional support (1) is rigid.

7. The system according to one of the preceding Claims 2-6, wherein the motor vehicle outer trim parts (8) comprise an engine cover, wherein the first direction is the z-direction of the motor vehicle.

8. The system according to Claim 7, wherein the automatic displacement in the first direction can be implemented by closing the engine cover.

9. The system according to one of the preceding claims, wherein the motor vehicle front elements (2; 3; 12) are design parts.

10. The system according to one of the preceding claims, wherein the motor vehicle front elements (2; 3; 12) comprise a headlight, a radiator grille, a bumper and/or a spoiler.

11. The system according to one of the preceding claims, wherein the displacement of the multi-functional support (1) relative to the body (11; 13; 14) is a displacement in three dimensions.

12. The system according to one of the preceding claims, wherein the multi-functional support (1) has a primary direction of extension in the transverse direction of the motor vehicle.

13. The system according to one of the preceding claims, wherein the multi-functional support (1) extends over the entire width of the body (11; 13; 14).

14. The system according to one of the preceding claims, wherein the multi-functional support (1) is formed in one piece.

15. A method for installing motor vehicle front elements (2; 3; 12) on a body (11; 13; 14) of a motor vehicle, wherein the motor vehicle front elements (2; 3; 12) in the installed state are visible in an external plan view of the motor vehicle, wherein the method comprises the steps of:
- installing the motor vehicle front elements (2; 3; 12) on a multi-functional support (1), wherein the multi-functional support (1) has a plurality of mounts for accommodating the installed motor vehicle front elements (2; 3; 12) in a supporting manner,
- fixing the multi-functional support (1) supporting the motor vehicle front elements (2; 3; 12) to the body (11; 13; 14) with use of a floating mounting of the multi-functional support (1) on the body (11; 13; 14),
- releasing the fixing and displacing the multi-functional support (1) relative to the body (11; 13; 14), wherein the displacement is performed such that a joint line (30), which is visible in an external plan view of the motor vehicle, between the motor vehicle front elements (2; 3; 12) and motor vehicle outer trim parts (8) directly adjacent to the motor vehicle front elements (2; 3; 12) is adjusted in a predefined manner,
- final fixing the multi-functional support (1) to the body (11; 13; 14),
**characterised in that** the crossmember (13) is secured to the body via crash boxes (14) of the motor vehicle, and wherein the multi-functional support (1) is fixed to the body (11; 13; 14) via the crossmember (13).

## Revendications

1. Système comprenant un support multifonctions (1) pour un véhicule automobile et une traverse (13) de la carrosserie du véhicule automobile, dans lequel le support multifonctions (1) comporte plusieurs logements destinés à porter des éléments frontaux de véhicule automobile (2 ; 3 ; 12), dans lequel les éléments frontaux de véhicule automobile (2 ; 3 ; 12) sont visibles dans l'état monté par une vue extérieure sur le véhicule automobile, dans lequel le support multifonctions (1) ensemble avec les éléments frontaux de véhicule automobile (2 ; 3 ; 12) logés peut être fixé de façon flottante sur une carrosserie (11 ; 13; 14) du véhicule automobile, le montage flottant étant réalisé de manière à ce que le détachement de la fixation et le coulissement du support multifonctions (1) par rapport à la carrosserie (11 ; 13; 14) permet un ajustement prédéfini d'un tracé de joint (30) visible dans une vue extérieure sur le véhicule automobile, entre les éléments frontaux de véhicule automobile (2 ; 3 ; 12) et des pièces de garniture extérieure du véhicule automobile (8) directement adjacentes aux éléments frontaux de véhicule automobile (2 ; 3 ; 12), dans lequel la traverse (13) est fixée à la carrosserie par des boîtes de collision (14) du véhicule automobile, **caractérisé en ce que** le support multifonctions (1) est fixé à la carrosserie par le biais de la traverse (13).

2. Système selon la revendication 1, dans lequel le support multifonctions (1) peut coulisser automatiquement dans une première direction par rapport à la carrosserie (11 ; 13 ; 14) à l'aide d'un élément élastique (21) entre le support multifonctions (1) et la carrosserie (11 ; 13 ; 14), après le détachement de la fixation.

3. Système selon la revendication 1 ou 2, dans lequel le support multifonctions (1) comporte un accessoire d'alignement rotatif, l'accessoire d'alignement étant conçu pour s'appuyer sur le support multifonctions (1) et la carrosserie (11; 13; 14), une rotation de l'accessoire d'alignement permettant de déplacer le support multifonctions (1) dans une deuxième direction par rapport à la carrosserie (11 ; 13 ; 14) après le détachement de la fixation.

4. Système selon la revendication 3, dans lequel l'accessoire d'alignement
- comporte une excentrique apte à s'appuyer contre la carrosserie (11 ; 13 ; 14) et/ou contre le support multifonctions (1), ou
- comporte une vis (42), la vis étant bloquée contre un déplacement axial dans la direction de l'axe de vis et fixée sur le support multifonctions (1) ou sur la carrosserie (11 ; 13 ; 14) de manière axialement immobile, la carrosserie (11 ; 13 ; 14) ou le support multifonctions (1) comportant un écrou complémentaire et bloqué contre le mouvement, pour l'admission de la vis par rotation.

5. Système selon l'une des revendications précédentes, dans lequel la fixation peut être rétablie après le coulissement du support multifonctions (1) par rapport à la carrosserie (11 ; 13 ; 14).

6. Système selon l'une des revendications précédentes, dans lequel le support multifonctions (1) est rigide à la flexion.

7. Système selon l'une des revendications précédentes 2-6, dans lequel les pièces de garniture extérieure du véhicule automobile (8) comprennent un capot de moteur, la première direction étant la direction z du véhicule automobile.

8. Système selon la revendication 7, dans lequel le coulissement automatique dans la première direction peut être activé par la fermeture du capot de moteur.

9. Système selon l'une des revendications précédentes, dans lequel les éléments frontaux de véhicule automobile (2 ; 3 ; 12) sont des pièces de design.

10. Système selon l'une des revendications précédentes, dans lequel les éléments frontaux de véhicule automobile (2 ; 3 ; 12) comprennent un phare, une calandre, un pare-chocs et/ou un déflecteur.

11. Système selon l'une des revendications précédentes, dans lequel le coulissement du support multifonctions (1) par rapport à la carrosserie (11 ; 13 ; 14) est un coulissement tridimensionnel.

12. Système selon l'une des revendications précédentes, dans lequel le support multifonctions (1) présente une direction d'extension principale dans la direction transversale du véhicule automobile.

13. Système selon l'une des revendications précédentes, dans lequel le support multifonctions (1) s'étend sur toute la largeur de la carrosserie (11 ; 13; 14).

14. Système selon l'une des revendications précédentes, dans lequel le support multifonctions (1) est conçu d'une seule pièce.

15. Procédé pour le montage d'éléments frontaux de véhicule automobile (2 ; 3 ; 12) sur une carrosserie (11 ; 13 ; 14) d'un véhicule automobile, dans lequel les éléments frontaux de véhicule automobile (2 ; 3 ; 12) sont visibles par une vue extérieure sur le véhicule automobile à l'état monté, le procédé comprenant :
- le montage des éléments frontaux de véhicule automobile (2 ; 3 ; 12) sur un support multifonctions (1), le support multifonctions (1) comportant plusieurs logements destinés à porter les éléments frontaux de véhicule automobile (2 ; 3 ; 12) montés,
- la fixation du support multifonctions (1) portant les éléments frontaux de véhicule automobile (2 ; 3 ; 12) sur la carrosserie (11 ; 13 ; 14) au moyen d'un montage flottant du support multifonctions (1) sur la carrosserie (11 ; 13 ; 14),
- le détachement de la fixation et le coulissement du support multifonctions (1) par rapport à la carrosserie (11 ; 13 ; 14), le coulissement étant effectué de manière à ajuster de manière prédéfinie un tracé de joint (30) visible dans une vue extérieure sur le véhicule automobile, entre les éléments frontaux de véhicule automobile (2 ; 3 ; 12) et des pièces de garniture extérieure du véhicule automobile (8) directement adjacentes aux éléments frontaux de véhicule automobile (2 ; 3 ; 12),
- la fixation définitive du support multifonctions (1) sur la carrosserie (11 ; 13 ; 14),
**caractérisé en ce que**
la traverse (13) est fixée à la carrosserie par le biais de boîtes de collision du véhicule automobile, et le support multifonctions (1) étant fixé à la carrosserie (11 ; 13 ; 14) par le biais de la traverse (13).
